# EUROPEAN PATENT APPLICATION

(11) **EP 4 697 160 A1**
(43) Date of publication of application: **18.02.2026**
(21) Application number: 25195617.3
(22) Date of filing: 13.08.2025
(51) Int. Cl.: G06F 8/20, G06F 8/36

(54) **SYSTEMS AND METHODS FOR REUSING CODE COMPONENTS**

(30) Priority: 16.08.2024 IN 202411062118; 12.11.2024 US 202418944596
(71) Applicant: Nasdaq Technology AB, 105 78 Stockholm (SE)
(72) Inventor: THANGESWARAN, Sivakumaresan, 560068 Bangalore South Bengaluru, Karnataka (IN); PANDA, Sagar, 560077 Bengaluru, Karnataka (IN)
(74) Representative: Ström & Gulliksson AB

(57) **Abstract**

This disclosure automates the sharing of components by development teams. A shared component build pipeline is incorporated seamlessly into the build pipeline of a first application. Shared components may be automatically updated when the first application is updated. A f storage device may have a plurality of local components, a plurality of shareable components provided by the first application, and a configuration file of the first application. The configuration file identifies the plurality of local components and the plurality of shareable components provided by the first application. The system is configured to detect, during processing the build pipeline of the first application, an indication of a shareable component included in the first application. The shared pipeline extracts the detected shareable component from the first application based on the indication, builds the detected shareable component, and stores the built shareable component as a shared component in a repository.

## Description

### TECHNICAL FIELD

The technology described herein relates to computer systems for cross-team collaboration in application development teams, and more particularly to systems and methods for automatically sharing selected components of an application.

Existing systems for cross-team collaboration may suffer from technical limitations such as increased build times due to inefficient component management, increased debugging time and integration errors due to incompatible components and inefficient memory usage. The technology described herein addresses these technical limitations by providing an automated and streamlined approach to component sharing.

### BACKGROUND

In existing software development collaboration platforms, typically a central group manages software components (e.g., functions or features) that are to be shared among multiple development teams. The central group managing the shared repository may become a bottleneck for deploying new shared components to the shared component repository and for maintaining the shared components to be current. This centralized approach may lead to technical challenges such as delays in component deployment, increased network traffic due to inefficient distribution of components, and difficulties in maintaining code consistency across multiple teams.

Alternatively, a development team that wishes to contribute one or more of the components that are developed for, and used in, that team's own application, has to separately compile or package the component and provide it as a library to another team. Reliance on individual development teams to, separately from their respective applications, maintain their contributed shared components also often leads to consistency issues in the shared components.

Inadequate sharing of developed components among the several development teams can lead to excessive redundant development efforts among different groups in an organization. Furthermore, this inadequate sharing may result in higher computational costs, increased memory footprint due to duplicated code, and may also hinder the ability to ensure code compatibility and robustness across different applications.

### SUMMARY

This disclosure therefore recognizes that systems and methods are desired for more efficient sharing of components among the different development teams in a collaboration computer system.

Accordingly, it will be appreciated that new and improved techniques, systems, and processes for development team collaboration computer systems are continually sought after.

The present disclosure addresses the recognized need for more efficient sharing of components by providing a system that automates the component sharing process. This automation can be achieved through a shared component build pipeline seamlessly integrated into a build pipeline of a first application. This technical implementation allows for dynamic component sharing, which in turn may lead to reduced build times e.g. due to caching and parallel processing, and/or enhanced code integration and reduced debugging time due to the automated testing framework. This may also result in optimized network traffic and memory usage resulting from efficient component sharing, and/or increased robustness of the application build process.

The appended independent claims address one or more of these aspects. Advantageous embodiments are defined in the appended dependent claims.

An embodiment of the present disclosure provides a computer system comprising a first digital storage device, a second digital storage device, and at least one processor. The first digital storage device has stored therein a plurality of local components, a plurality of shareable components provided by a first application, and a configuration file of the first application. The configuration file identifies the plurality of local components and the plurality of shareable components provided by the first application. The at least one processor is configured to: detect, during processing a build pipeline of the first application, an indication of a shareable component included in the first application, wherein the shareable component is shared by the first application; extract, based on the indication and by executing instructions in a shared pipeline, the detected shareable component from the first application; build, by executing instructions in the shared pipeline and by linking one or more shared components from a shared component library, the detected shareable component; and store the built shareable component as a shared component in a repository in the second digital storage device, the second digital storage device being accessible by one or more second applications.

Another embodiment provides a method performed by at least one processor of a computer system comprising a first digital storage device and a second digital storage device. The method comprises detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application. The method further comprises: extracting, based on the indication and by executing instructions in a shared pipeline, the detected shareable component from the first application; building, by executing instructions in the shared pipeline and by linking one or more shared components from a shared component library, the detected shareable component; and storing the built shareable component as a shared component in a repository in the second digital storage device, the second digital storage device being accessible by one or more second applications.

Another embodiment provides a non-transitory computer readable storage medium storing instructions which, when executed by at least one processor of a computer system that comprises a first digital storage device and a second digital storage device, causes the computer system to perform operations. The operations comprises detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application. The operations further comprises: extracting, based on the indication and by executing instructions in a shared pipeline, the detected shareable component from the first application; building, by executing instructions in the shared pipeline and by linking one or more shared components from a shared component library, the detected shareable component; and storing the built shareable component as a shared component in a repository in the second digital storage device, the second digital storage device being accessible by one or more second applications.

This Summary is provided to introduce a selection of concepts that are further described below in the Detailed Description. This Summary is intended neither to identify key features or essential features of the claimed subject matter, nor to be used to limit the scope of the claimed subject matter; rather, this Summary is intended to provide an overview of the subject matter described in this document. Accordingly, it will be appreciated that the above-described features are merely examples, and that other features, aspects, and advantages of the subject matter described herein will become apparent from the following Detailed Description, Figures, and Claims.

### BRIEF DESCRIPTION OF THE DRAWINGS

These and other features and advantages will be better and more completely understood by referring to the following detailed description of example non-limiting illustrative embodiments in conjunction with the drawings of which:
Figure 1 shows an example application development collaboration computer system that that provides a platform for application development teams to share application components, according to some embodiments;
Figure 2A shows an example application development platform pipeline that enables teams to contribute (e.g., share) and/or to consume application components in a system such as the system of Figure 1, according to some embodiments;
Figure 2B shows an example shared pipeline invoked in the application development platform pipeline shown in Figure 2A, according to some embodiments;
Figure 3A shows a framework for an application using platform services on a system such as the computer system of Figure 1, according to some embodiments;
Figure 3B shows an example component configuration file for applications using platform services on a system such as the computer system of Figure 1, according to some embodiments;
Figure 4 shows an example build pipeline of an application using platform services on a system such as the computer system of Figure 1, according to some embodiments;
Figure 5 shows an example build pipeline of an application using platform services on a system such as the computer system of Figure 1, according to some embodiments;
Figure 6 shows an example of programming code included in components to be shared using platform services on a system such as the computer system of Figure 1, according to some embodiments;
Figures 7A-7C show examples of a user interface using shared components from platform services on a system such as the computer system of Figure 1, according to some embodiments;
Figure 8 shows a flowchart of processing performed for platform services on a system such as the computer system of Figure 1, according to some embodiments;
Figure 9 shows a flowchart of processing of another aspect performed for platform services on a system such as the computer system of Figure 1, according to some embodiments;
Figure 10 shows an example computing device that may be used in some embodiments to implement features described herein.

### DETAILED DESCRIPTION

In the following description, for purposes of explanation and non-limitation, specific details are set forth, such as particular nodes, functional entities, techniques, protocols, etc. in order to provide an understanding of the described technology. It will be apparent to one skilled in the art that other embodiments may be practiced apart from the specific details described below. In other instances, detailed descriptions of well-known methods, devices, techniques, etc. are omitted so as not to obscure the description with unnecessary detail.

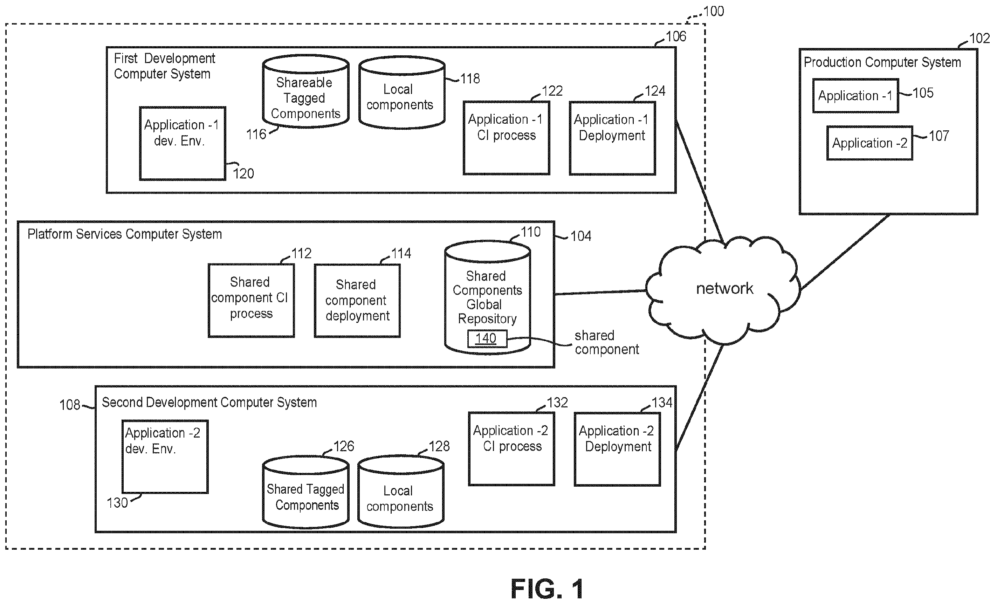

Sections are used in this Detailed Description solely in order to orient the reader as to the general subject matter of each section; as will be seen below, the description of many features spans multiple sections, and headings should not be read as affecting the meaning of the description included in any section. Some reference numbers are reused across multiple Figures to refer to the same element; for example, as will be provided below, the collaboration computer system 102 first shown in Figure 1 is also referenced and described in connection with other figures.

### Overview

This disclosure describes systems and techniques for sharing application components (functions or features) between software development teams. The described systems and methods automate the sharing of components such that, in contrast to existing software development collaboration systems, dynamically incorporates a shared pipeline into the context of another application's build pipeline so that the sharing of selected components of the other application is automated and the burden on the development team of the other application to maintain the shared components is minimized.

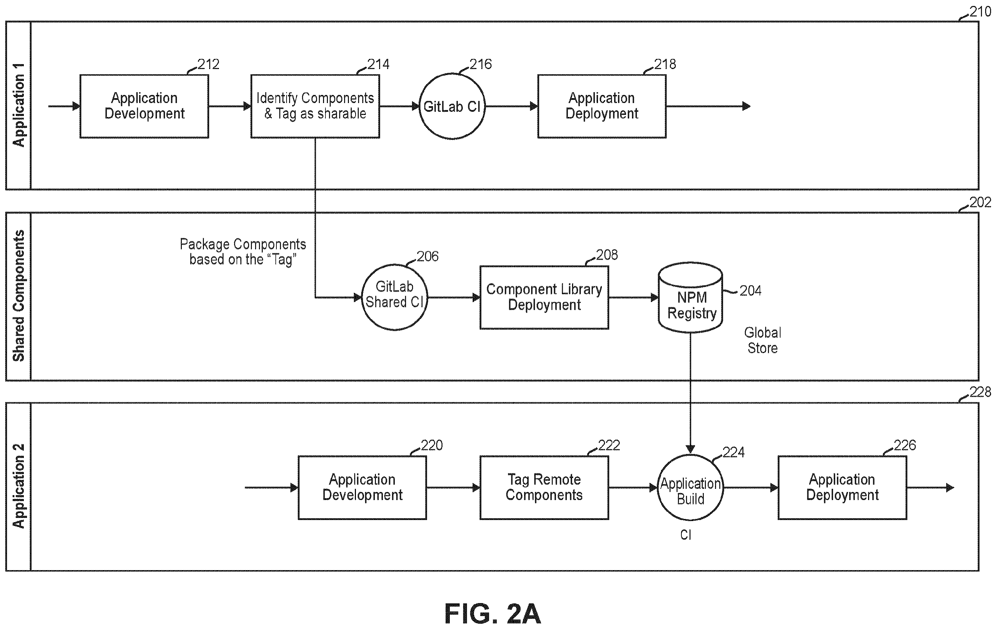

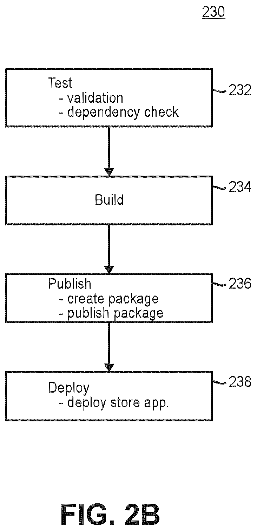

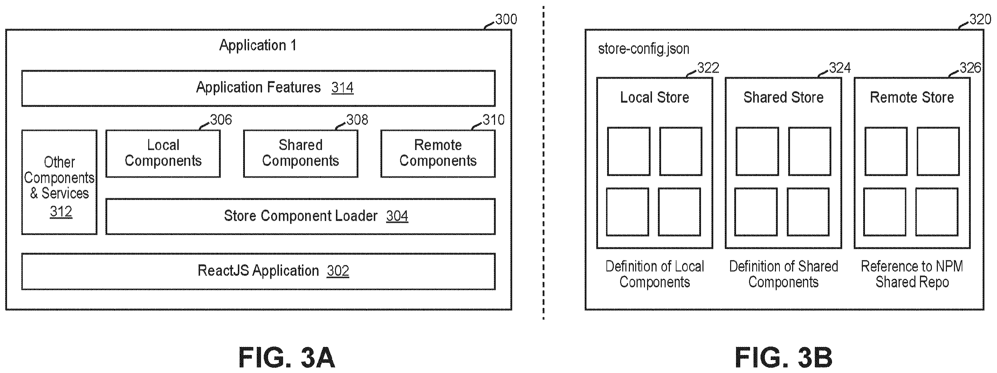

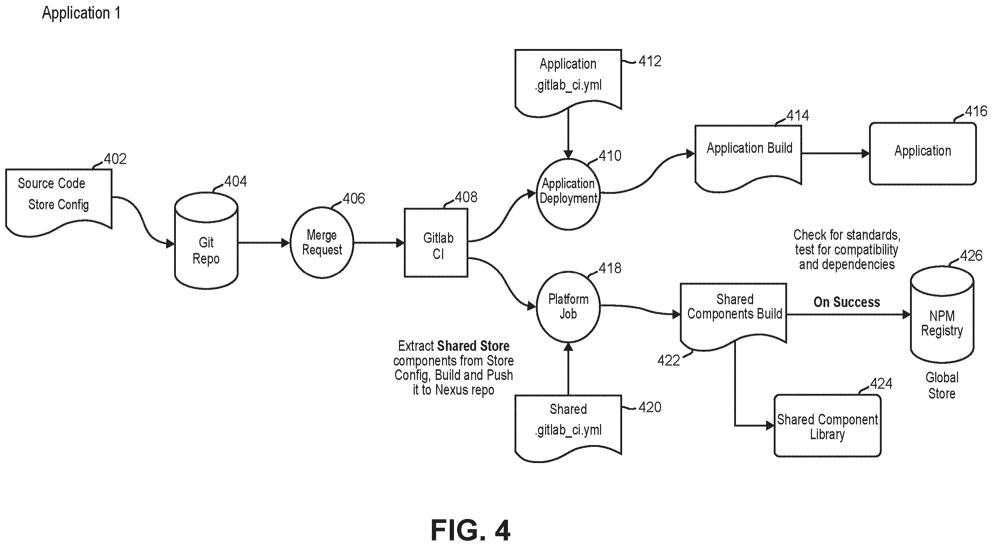

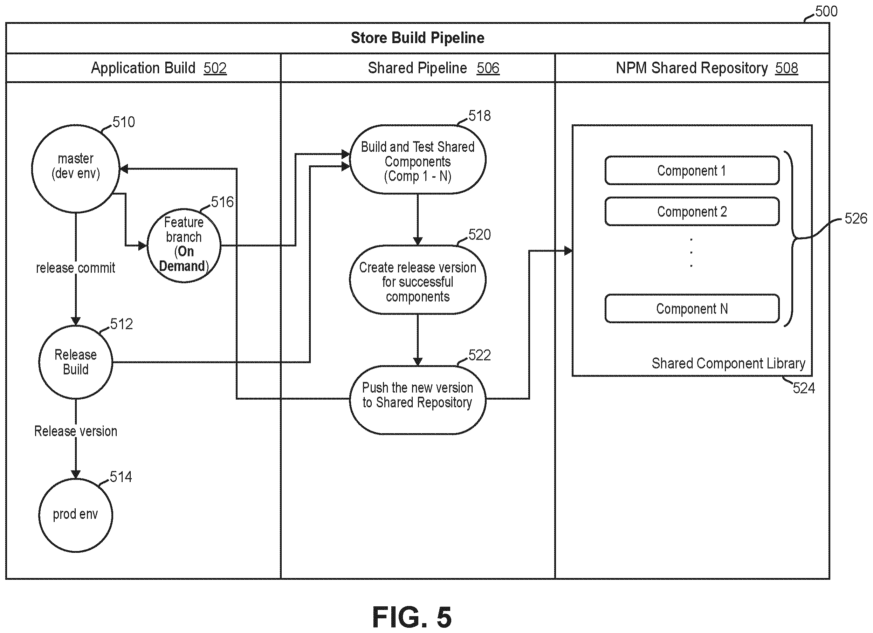

Figure 1 shows an example application development collaboration computer system that that provides a platform for application development teams to share application components, according to some embodiments. Figure 2A shows an example shared pipeline that enables development teams of respective applications to contribute (e.g., share) and/or to consume selected components of the respective applications, in a collaboration system such as shown in Figure 1. Figure 2B shows some aspects of the shared pipeline shown in Figure 2A that extracts and deploys shared components to a shared component repository in more detail according to some embodiments. Figure 3A shows a framework for applications using platform services on a system such as the computer system of Figure 1, according to some embodiments. Figure 3B shows an example component configuration file for applications using platform services on a system such as the computer system of Figure 1, according to some embodiments. Applications adhering to the framework shown in Figure 3A may use any of one or more local components, one or more shared components, and/or one or more remote components as specified in corresponding component configuration files. Figure 4 shows another example build pipeline of an application using platform services on a system such as the computer system of Figure 1, according to some embodiments, and illustrates the parallel execution of the application's build pipeline and the shared pipeline. Figure 5 shows another example build pipeline of an application using platform services on a system such as the computer system of Figure 1, according to some embodiments, and illustrates the triggering of the shared pipeline upon a release commit or an on-demand instruction.

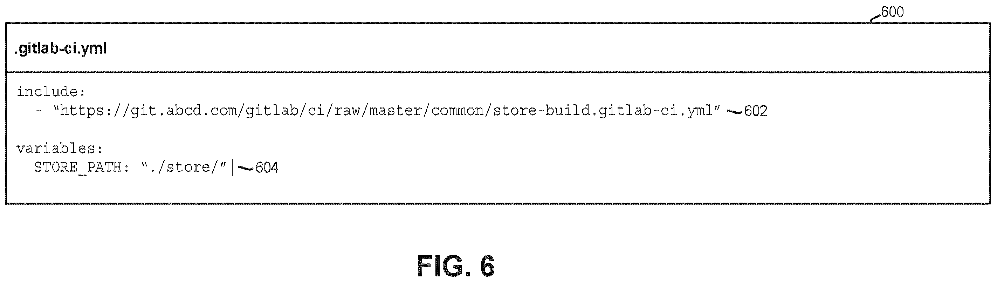

Figure 6 shows an example of code that may be included in components to be shared using platform services on a system such as the computer system of Figure 1, according to some embodiments. The code dynamically incorporates the shared pipeline into an application's build pipeline at runtime.

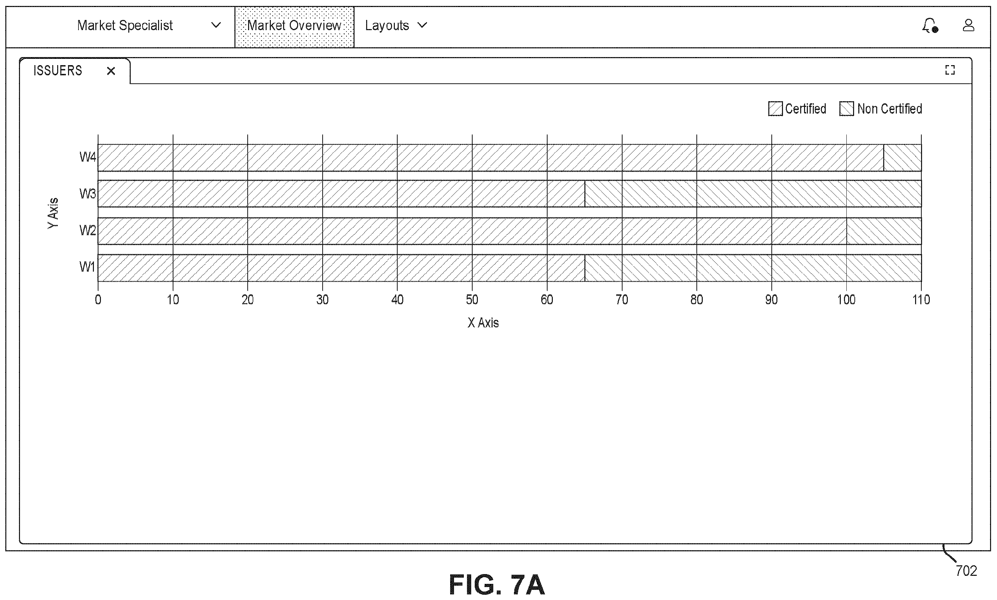

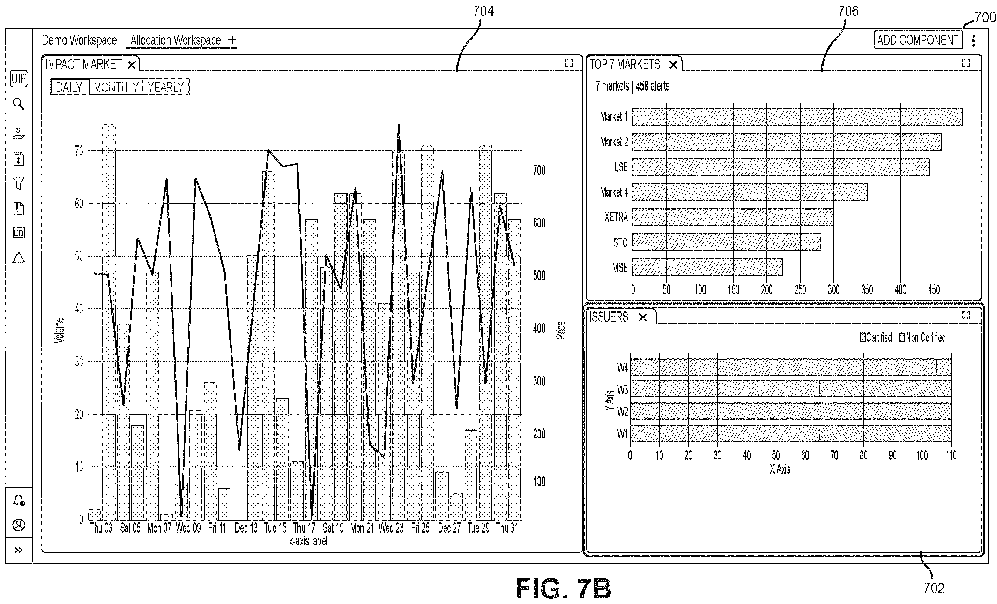

Figures 7A-7C show examples of a user interface using shared components from platform services on a system such as the computer system of Figure 1, according to some embodiments. The component shown in Figure 7A is shared by a first application, and is obtained from a repository and used in a user interface by a second application as shown in Figure 7B.

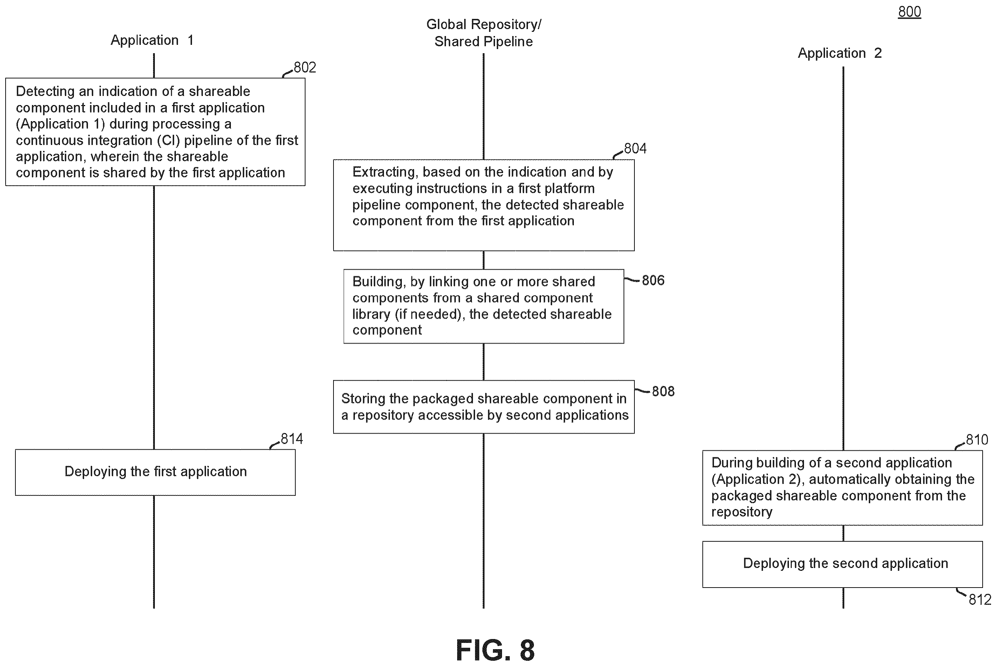

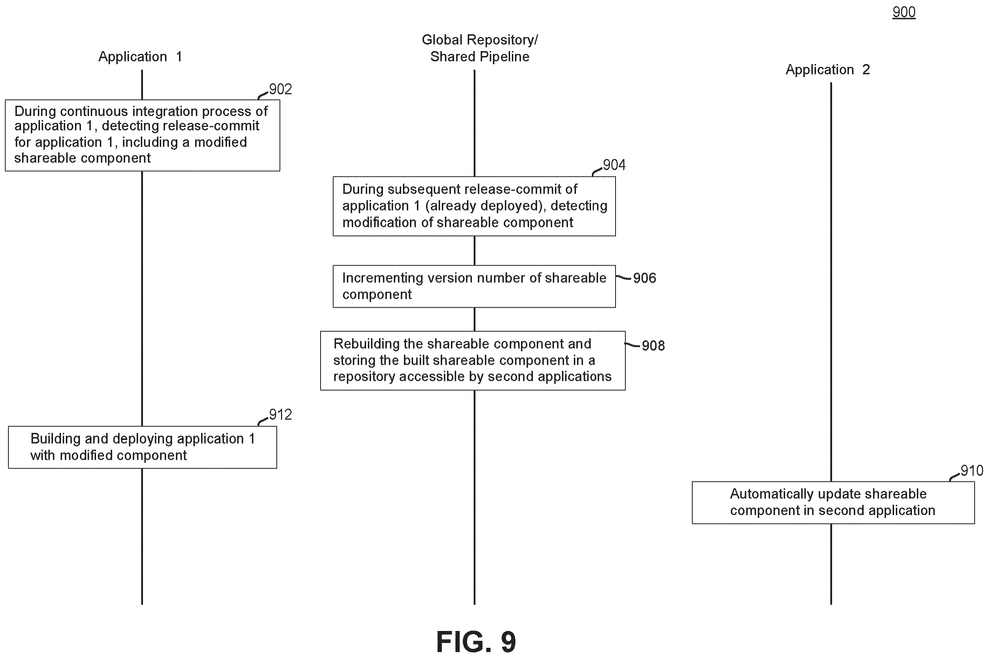

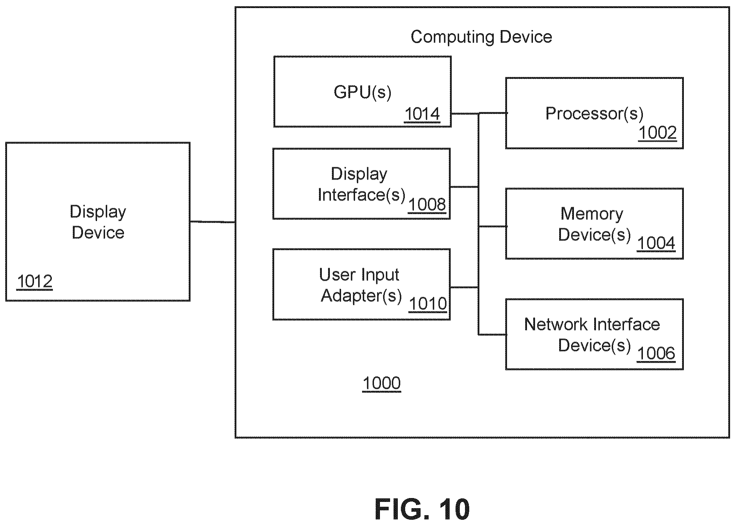

Figure 8 and Figure 9 show flowcharts of processing performed for platform services on a system such as the computer system of Figure 1, according to some embodiments. Figure 10 shows an example computing device that may be used in some embodiments to implement features described herein.

In many places in this document, software (e.g., modules, software engines, processing instances, services, applications and the like) and actions (e.g., functionality) performed by software are described. This is done for ease of description; it should be understood that, whenever it is described in this document that software performs any action, the action is in actuality performed by underlying hardware elements (such as a processor and a memory device) according to the instructions that comprise the software. Such functionality may, in some embodiments, be provided in the form of firmware and/or hardware implementations. Further details regarding this are provided below in, among other places, the description of Figure 10.

### Description Of Figure 1

Figure 1 shows an example application development collaboration computer system ("collaboration computer system") 100 that enables efficient sharing of software components among different development teams. The collaboration computer system 100 may be deployed in an organization to be used by multiple development teams in developing and deploying their respective software products. An application development team ("development team") may use the collaboration computer system 100 to automatically contribute software components that are developed by it and used in its application to a shared component repository as shared components. The collaboration computer system can also be used by the development team to obtain for use in its application, software components shared to the shared component repository by other development teams. For example, a first development team may develop a first application that is intended to display a user interface with multiple widgets that are arranged on the user interface. A set of services ("platform services") provided in the collaboration computer system 100 enables the first application development team to efficiently and conveniently include some platform services-provided program code that would automatically, during build pipeline execution for the first application, cause one or more selected components of the first application to be shared to the shared component repository. A second application that is developed by a second development team can then include the component shared by the first development team from the shared component repository.

In some existing collaboration computer systems, a central team develops and maintains all shared components that are then used by multiple development teams in an organization. In other existing collaboration computer systems, a development team that wants to share a component with other teams would have to compile or package each such component individually to be provided as a library to another team. The contributing development team is then expected to also maintain the shared component.

In an example conventional system, multiple development teams own and develop user interface (UI) applications in silos and between these teams there is no or very little code sharing that occurs. When code sharing is done, it occurs in the form of libraries. The features are packaged into a library and distributed through publishing to a repository (e.g., in the case of JavaScript, an NPM^{™} Internal Registry may be used). The published library can be pulled into another project for its delivery requirements. The development team is relied upon to maintain the shared packages incurring substantial ongoing burdens on the development team.

Therefore, existing collaboration computer systems, due possibly to bottleneck issues with a centralized team and/or additional overhead placed on development teams, do not adequately address redundant code development and lack of code reuse in an organization.

In contrast to existing collaboration computer systems, example embodiments of the present disclosure facilitate the sharing of components by development teams by automating the sharing. Example embodiments incorporate a shared component build pipeline seamlessly into the build pipeline of an development team's own application so that there is minimal additional burden on the development team to share selected components from its application. Moreover, example embodiments provide for shared components to be automatically updated when the corresponding contributing application is updated. Thus, collaboration computer systems according to example embodiments may substantially increase code reuse and minimize redundant development in an organization while imposing minimal burdens on the development teams and without the bottlenecks of a centralized team that is responsible for each shared component.

Figure 1 shows that software applications developed on the collaboration computer system 100 may be deployed to a production system 102. For example, user interface applications application-1 105 and application-2 107 which are developed and built on the collaboration computer system 100 may be subsequently deployed to the production system 102 to execute and provide access to users. The production system 102 may include any number of computers and may either be geographically centralized or distributed.

The collaboration computer system 100 may include a platform services computer system 104, a first development computer system 106, and a second development computer system 108. In some embodiments, the collaboration computer system 100 may provide a development platform and/or environment for a single organization. In some other embodiments the collaboration computer system 100 may be a service accessed by development teams from multiple organizations that may geographically distributed. The platform services computer system 104 is configured to provide the common platform services to the first development team developing and maintaining the first application 105 and the second development team developing and maintaining the second application 107. The first and second development teams use the first development computer system 106 and the second development computer system 108, respectively. For ease of description, and without loss of generality, the first and second applications are UI applications such as, for example, using frontend technologies like ReactJS^{™}. The development teams may use a development environment that provides a React Component Library or the like for developing the application code.

Each of the computer systems 104-108 may include one computer or more than one computer connected by a network. Each of the computer systems 104-108 may either be distributed or centralized and controlled by one organization or by multiple organizations.

The platform services computer system 104 includes a shared components global repository 110, a shared component continuous integration (CI) process 112 and a shared component deployment process 114.

The shared component global repository 110 may be a GitHub^{™} Node Package Manager (NPM^{™}) repository or the like that is configured to store shared components that are ready to be consumed by other applications. The shared components are stored in the repository as packages. Each shared component may be owned by one of the development teams and is built from the code of the first application. For example, during development of the first application, the first development team may select the code for a first component (e.g., a widget for a particular service) in the first application as shareable and may mark (tag) it as such (e.g., as shareable). The shared components, for example, the shared component 140, is a packaged component that the second development team can obtain from the shared component global repository 110 and use in the second application.

The shared component continuous integration (CI) module 112 provides code modules for extracting/packaging shared components and for pushing the packaged shared components to the shared components global repository 110. The program instructions provided by module 112 for packaging the shared components and pushing the shared components onto the shared component global repository 110 are executed during the build process of the first application and/or the second application when the respective development team has inserted, in the code of its application (e.g., first application or second application), the designated code provided by platform services. The shared component CI module 112 includes platform services maintained shared pipeline code for packaging components that are marked as shareable and, in coordination with the shared component deployment module 114, for deploying the packaged shared components to the shared component global repository 110. The shared pipeline code is dynamically obtained by the first application CI process at runtime from the platform services computer system 104 and executed as part of the first application build process. Because the shared pipeline code is executed as part of the first application build process, it executes in the context of the first application build process.

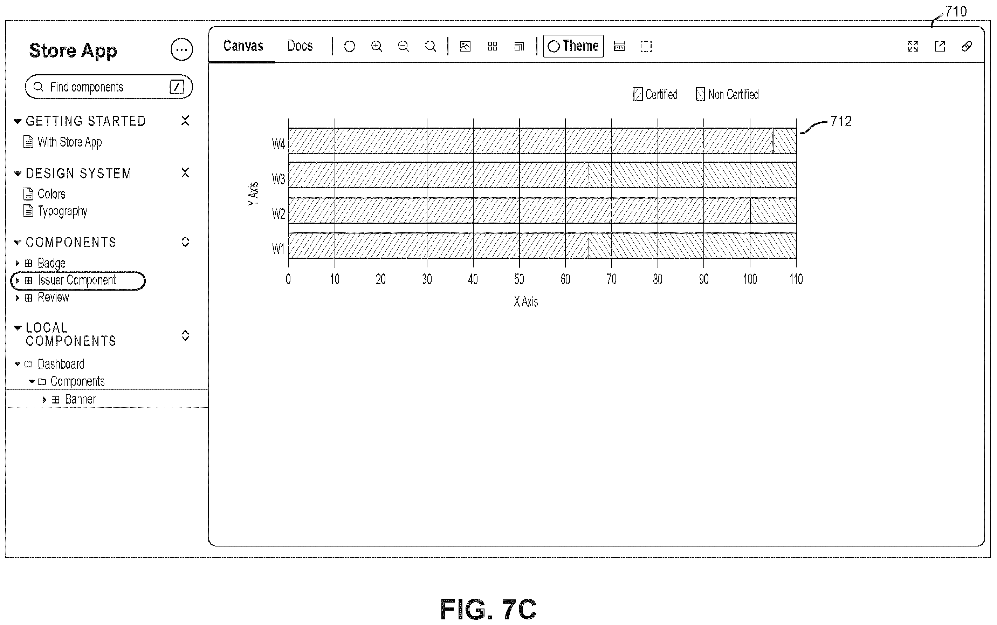

The shared component deployment module 114 includes code for processes for deploying the shared components to the shared component global repository 110. For example, the shared component CI module 112 may use the shared component deployment module 114 to test and package shared components before they are deployed to the shared component global repository 110. In some embodiments, with the testing and packaging, the package is published to the shared repository, and also the store app (see description of Figure 7C) is deployed with the new package reference. The shared pipeline is described further in relation to Figure 2B.

The first development computer system 106 includes a shareable component repository 116, a local component repository 118, an application development environment 120, an application continuous integration process 122, and an application deployment process 124.

The shareable tagged components repository 116 and the local component repository 118 store the source files of the shareable components designated as such by the first development team, and components that are not shared by the first development team, respectively. In some embodiments, the sharable tagged components repository 116 and the local component repository 118 repositories of source files, such as, for example, JavaScript files. It should be noted that whereas the shared component global repository 110 stores packaged shared components, what is stored in repositories 116 and 118 may be source files. Although shown in Figure 1 as physically separate, the repositories 116 and 118 can be in one physical repository or more than one physical repository.

The application development environment 120 provides the development environment for the first development team to develop the first application. For example, the application development environment 120 may include a development environment such as a Gitlab^{™} development environment, Storybook^{™} development environment, or the like. The development environment may also include facilities to initiate the build process and testing of the application.

The first application continuous integration (CI) module 122 may implement the first application's build process. The first application's build process may include several stages: a build stage, a test stage, and a deploy stage. When the build process executes for the first application, in addition to the build stages provided by the first application CI module 122, the build process also includes a stage of extracting and packaging any components of the first application that are identified in the code as shareable, and a stage of pushing the packaged shareable components to the shared component global repository 110. The stage or stages of extracting/packaging sharable components and the stage of pushing the packaged shareable components to the shared component global repository 110 are dynamically included in the CI process of module 122, from the shared component CI module 112.

The first application deployment module 124 completes the packaging of the first application and testing of the first application, and subsequently deploys the first application. For example, the tested and packaged first application may be deployed to the production system 102 to be executed as the first application 105.

The second development computer system 108 includes a shareable component repository 126, a local component repository 128, an application development environment 130, an application continuous integration process 132, and an application deployment process 134.

The shareable tagged components repository 126 and the local component repository 128 store the source files of the shareable components (if any) designated as such by the second development team, and components that are not shared by the second development team, respectively. In some embodiments, the sharable tagged components repository 126 and the local component repository 128 repositories of source files, such as, for example, JavaScript files. Although shown in Figure 1 as physically separate, the repositories 126 and 128 can be in one physical repository or more than one physical repository.

The application development environment 130 provides the development environment for the second development team to develop the second application. For example, the application development environment 130 may include a development environment such as a Gitlab^{™} development environment, Storybook^{™} development environment, or the like. The development environment may also include facilities to initiate the build process and testing of the application.

The second application continuous integration (CI) module 132 may implement the second application's build process. The second application's build process may include several stages: a build stage, a test stage, and a deploy stage. In the example second application, for purposes of this description, it may be assumed that the second development team has not marked any components of the second application as shareable but includes one or more components from the shared components global repository 110. During the build process of module 132, any such shared components are automatically included from the shared component global repository into the second application.

The second application deployment module 134 may perform any further packaging required for the second application and testing of the second application before deploying the second application. As noted above, the first application deployment module 124 and second application deployment module 134 may deploy the built first application and the second application, respectively, to run on the production system 102. The first application 105 and the second application 107 running on the production system 102 may enable users to view and interact with a user interface screen that has one or more application components, or user interface components, arranged on it. In the description above, shared component 140 may, for example, provide a user interface component that is developed by the first development team and shared, and subsequently used by the second application.

In some embodiments, the user interfaces of the first application and/or the second application are displayed by a browser running on a client device. The user interfaces of the first application and/or the second application may be client-side web applications run by the browser. Messages between the web server and the browser may include HTTP messages or messages of another protocol for browser-web server communication. In the system environment of Figure 1, the collaboration computer system 100 is communicatively connected to the production system 102 via a network. The application development computer systems 106 and 108 may each be connected to the platform services computer system 104 through the same or network. It will be understood, however, that Figure 1 may represent a logical view of the system environment and in some implementations, the computer systems 104-108 may be in a cloud environment.

Example embodiments may apply to collaboration platforms for developing any type of software. Although this application uses user interface applications as examples, embodiments are not limited to collaboration platforms for the development of user interface applications.

### Description Of Figures 2A-2B

Figure 2A shows an example application development platform build pipeline that enables application development teams to contribute (e.g., share) and/or to consume application components in a system such as the system of Figure 1, according to some embodiments. A shared pipeline 202 is provided by the platform services computer system 104 to be invoked by, or included in, the first application's build pipeline 210 when the first application has one or more shareable components tagged as shareable. The code for the shared pipeline 202 may be centrally managed by a platform services team.

During the first application build pipeline 210, the first application is subjected to an application development stage 212, a shareable code identification stage 214, a CI stage 216 and an application deployment stage 218. During application development 212, the first development team develops the first application and marks (tags) one or more components of the first application as being shareable.

The CI stage 216 performs continuous integration of the first application. In some examples, CI stage 216 may include a Gitlab CI process. The CI stage 216 integrates code changes to the first application, and the application deployment 218 may perform any further packaging and testing of the first application to be deployed, for example, to a production system.

Tagging a component as shareable may comprise including one or more code components provided by platform services. For example, during application development of the first application one or more program instructions provided by platform services are inserted into the code of the shareable component. The inserted one or more program instructions provide for, before or during the CI stage 216, automatically including one or more code components provided by platform services that, possibly in parallel to the CI stage 216, trigger the shared pipeline 210 to package the tagged shareable component.

The code for the shared pipeline 202, or more specifically the shared CI stage 206 and the component library deployment stage 208 of the shared pipeline 210, may be maintained by platform services, and included automatically and dynamically in applications that invoke that code during their respective build processes. When the shared pipeline 202 is invoked during the build processing, during or before the CI processing, of an application (e.g., first application) triggered by the code of a shareable component being tagged as shareable, the shared pipeline 202 may start running in parallel to the build process of the application. Whereas the build process of the application proceeds to package the application, including the shareable component, into a package to deploy, the shared pipeline 202 extracts the code of the shareable component (e.g., makes a copy of the shareable component). The shared pipeline 202, or more specifically the shared CI stage 206 and the shared component deployment stage 208 of the shared pipeline 202, proceeds to package and test the shared component, and upon completion of the tests, deploy the packaged shareable component as a package (library) into the shared component global registry 204. Figure 2B illustrates the shared pipeline 202 in more detail.

The second application build pipeline 228 is similar to the first application build pipeline 210. During the second application build pipeline 228, the second application is subjected to an application development stage 220, a shareable code identification stage 222, a CI stage 224 and an application deployment stage 226. During application development 220, the second development team develops the second application and marks (tags) one or more components of the second application as being shareable.

The CI stage 224 performs continuous integration of the second application. When one or more components of the second application have been tagged for sharing, the CI stage 224 may invoke the shared pipeline 202. However, in this example being described, the second application does not have any components tagged for sharing, and therefore the second application CI process does not invoke the shared pipeline 202. The CI stage 224 integrates code changes to the second application, and the application deployment 226 may perform any further packaging and testing of the second application to be deployed, for example, to a production system.

Figure 2B shows the shared pipeline 202 that is invoked as part of the application build pipeline (e.g., the first application build pipeline 210) shown in Figure 2A. The shared pipeline 202 extracts and deploys shared components to a shared component repository (e.g., shared component global repository 204 or equivalently shared component global repository 110), according to some embodiments.

According to some embodiments, the shared pipeline 202 includes a collection of one or more CI pipeline stages/tasks 232 - 238 which will be executed in the invoking application's environment, to build and push the components which are tagged as shared/shareable to the shared component repository. The CI pipeline stages/tasks 232 - 238 may be performed anonymously without any, or only minimal, development effort for the first application team. All pipeline stages/tasks described in relation to Figure 2B below may be executed as tasks in the shared pipeline (including a shared CI stage and component deployment stage), which gets executed in parallel along with the invoking application build pipeline. For example, in keeping with the example of Figure 2A, the first application build pipeline 210, upon detecting that one or more shareable components in the first application have been tagged as shared/shareable, invokes the shared pipeline 202 which then causes stages 232-238 to be executed in the application context of the first application.

The shared pipeline may begin at test stage 232 after the shared component is extracted/copied from the invoking application. In the test stage 232 of the shared pipeline, a validation task and a dependency check task are performed. Validation includes, before the tagged component gets packaged for publishing (e.g., to the shared component repository), validating that all the dependencies and required details are present in each component's definition in the application's component configuration file (e.g., store.config file). For example, if a component is expected to work with ReactJS 18 version then that information should be mentioned in the first application's component configuration file. Likewise, other library dependencies may be explicitly configured and verified at this stage. Validating may also include a vulnerability scan.

In the dependency check task one or more subtasks are performed to verify and resolve dependencies of the shared component. For example, if the component is marked to work with ReactJS 18 as a major version, then it will be verified against the invoking application's configuration (e.g., in the described example, the first application's configuration). Additionally, the pipeline also verifies that the supplied version is supported by the shared component store (e.g., NPM registry 204 or equivalently shared component global repository 110) or not, for example, in some examples, the shared component store may not support ReactJS version which is less than or equal to version 17.

In the build stage 234 many tasks are performed. Although it is referred to herein as build stage, this stage performs several tasks for various verifications against each component that is marked for sharing in the invoking application.

One important aspect for sharing components between development teams in a collaboration computer system is that, each component should be independent and should run without any issues in an agreed upon (i.e., standardized among the development teams) environment. In order to ensure this is verified, the platform services (e.g., platform services computer system 104) may provide a unique testing build pipeline. The testing build pipeline may be configured to generate a shell app (e.g., a thin hosting app) during the shared pipeline, to load each component into it, and subsequently build and test the same for several aspects.

A first of the several aspects for testing may include checking whether each component is buildable without the parent/invoking application (e.g., the first application) environment. The parent application is the application in which the shared component is developed and/or included as source code. For example, in the example scenario described above in relation to Figure 1, the parent/invoking application for the shared component 140 is the first application.

A second of the several aspects for testing includes running code coverage for each component and unit tests to ensure they execute successfully.

A third of the several aspects for testing includes running an end-to-end UI test to ensure all the integrations in the UI works as expected.

In the publish stage 236 of the pipeline a package is created, and then the package is published. At this stage, as all the test and builds are successful, now the components are ready to get packaged and deployed. Each component is a unique package and based on the component's unique Name (e.g. abcd-workspace-manager component) and the current published version (if the component is already published once) a new version of the component will be created and stored in the local path (e.g., a GitLab CI server).

Subsequently a package publishing task may push the locally stored package to a remote repository (e.g., e.g., NPM registry 204 or equivalently shared component global repository 110) based on the remote repository configuration.

In the deploy stage 238, the package is deployed. Once all the components as packages are published to the remote store (e.g., shared repository), the deploy task may update the "store app" for the invoking application with the new package version and deploy the same to verify all latest components available from the invoking application. The store app (e.g., shown in Figure 7C) enables development teams to view and test the shared components from the repository. In an example, a tool in a UI application may be Storybook. Storybook is a UI Development tool which can enable developers to host identified components in a storybook and test them independently in absence of the application context.

Additionally, in some embodiments, there may also be a configuration that is set in the pipeline overall so that even if shared pipeline fails, the invoking application's build (e.g., Cl/deployment stages of the pipeline) pipeline can run without faults. This may be to ensure that the invoking application's development and delivery plans are not negatively affected by any of the platform services functions for sharing components.

### Description Of Figures 3A And 3B

Figure 3A illustrates the logical framework of an application that is configured to contribute one or more components to be shared with other applications in a collaboration computer system, and/or to use one or more components that are shared by other applications in the collaboration computer system.

For purposes of description, it may be considered that framework 300 logically illustrates an organization of the first application 105. The application features 314 of the first application may include the layout (e.g., navigation components, header/footer components) of, the generating of, and the operation of, a user interface (UI) displayed on a screen. The application features 314 and components loaded by the store component loader are subsequently run as a ReactJS application 302.

Between the application features functions 314 and the ReactJS application functions 302, the application functions 314 may access or provide any of local components 306, shared components 308, and remote components 310. These different types of components are described in the application's component configuration file (store.config file). A store component loader 304 function enables the ReactJS application 302 functions to access, load, or otherwise operate on the components used in the application. In addition, other components and services function 312 enables the ReactJS application functions 301 and the application features 314 to interact for the application.

The store component loader 304 is a module, which provides tools and utilities to load required components from the store (repository) based on the configuration in the corresponding component configuration file. For example, if the required component is from local store then the store component loader 324 returns the component from a local reference. The store component loader may be distributed as a JavaScript library (NPM Package) and can be made available at the application context. Developers can use the store component loader 304 to load required components in their views or other components.

A store app may be formed as a ReactJS component and may be distributed as a NPM package. The store may provide tools and a Storybook to develop components independently. In an example implementation, the store may be organized as a sub folder within any given application source code, where all the React components are added along with a root level configuration named "store-config.json". A component which is part of a store may technically enable two things: provide a Storybook for all independent components defined in the store config file; and ensures that components can be tested visually before they are pushed to the shared component library. In some embodiments, the store app may be added to any existing application by adding the store package to the application's package dependency. Once it is added, it can refer to the store config and showcase all the components in the development environment (e.g., Storybook). Figure 7C shows a user interface of an example store app.

The store component loader and the store app may be some of the tools that is provided to bootstrap the development environments provided for applications such as the first application and the second application described in relation to Figure 1.

The application design framework shown in Figure 3A and the component configuration file shown in Figure 3B are most advantageous when the applications adhere to component-based design. A component, as used herein as shortened form for software component, refers to a function or a function implementing an application feature. For example, the graph 702 shown in Figure 7A is generated by an example component.

In a typical UI application, ideally everything can be viewed as a component in the application. In general, a collection of components put together in a nested structure, along with a workflow will result in a product or application. Saying that, technically ReactJS with styled-components may enable such a development technique. A component may also be considered as an independent piece of code which represents a UI functionality or code which helps to perform certain function with the given input.

The framework of Figure 3A facilitates for a developer to, in developing a new frontend application or rewriting an existing application, start with a starter template (e.g., code generator) for ReactJS, which provides basic building blocks of a frontend app with required configuration files. Then the configuration files can be updated to load components from a local or shared store (from the same source) or from NPM repository (Remote). The framework and the component-driven design to facilitates efficient development time or build time sharing.

Figure 3B illustrates the logical layout of the component configuration file, also referred to as the "store.config" file, of an application designed according to the framework of Figure 3A. For example, the component configuration file 320 may be that of the first application 300 shown in Figure 3A.

The component configuration file 320 includes the definition of any local components in a local store 322, the definition of any shared components in a shared store 324, and the definition of any remote components in a remote store 326, that are used by the first application. As already noted above, local components in the local store 322 are components of the first application that are not designated as shared/shareable by the invoking application, shared components in the shared store 324 are components tagged shared/shareable in the first application, and remote components in the remote store 326 are components used by the first application that are obtained from the shared repository (e.g., components shared by other applications of the collaboration computer system).

The shared store 324 of an application (as defined by its component configuration file) holds components which are locally developed and used but shared with other applications (e.g., through NPM registry). In some embodiments, the development team which develops a shared component will not have any extra effort than merely adding required configuration. Required platform tools may automatically build and publish the components to the shared repository. Whenever there is a change in the shared component due to a new release, a version tag is created and the change is pushed to the registry as part of the application build.

The store config file may be a JSON format file, which may include all the required definition and external references to the remote (e.g., global) store. The config file along with the store component loader (shown in Figure 3A), may be used to make all the required components available for the application to deliver business use cases.

Although Figure 3A illustrates an application framework for a ReactJS application, the applications such as the first application and the second application described in relation to Figures 1-2B may be implemented using other programming technologies.

### Description Of Figure 4

Figure 4 shows an example build pipeline of an application using platform services on a system such as the computer system of Figure 1, according to some embodiments.

The build pipeline, for example, for a first application as described in relation to Figures 2A-2B, may begin when a code merge request is processed at stage 406. The merge request may be to merge one or more code modifications to a deployed application.

Stage 406 accesses the component configuration file (store.config) 402 of the application through a repository (e.g., GitHub repository) 404 and obtains or loads the components of the applications as specified in the component configuration file 402. The components may include any of one or more local components, one or more shared components and/or one or more remote components.

The pipeline proceeds to stage 408. At stage 408, the GitLab CI process of the application is started. When the application includes one or more components that are tagged as shared/shareable, the CI process loads the shared pipeline provided by platform services. The shared pipeline is automatically and incorporated into the application's build pipeline. For each shared component, a shared pipeline job 418 may be initiated in parallel to the application's build.

The application's build pipeline, at deployment stage 410, executes an application build pipeline specification 412 provided by the application development team. The specification 412 includes any dependencies etc. required for the application, that are resolved at stage 410. The resulting application build 414 is then packaged and deployed 416.

The shared pipeline job 418 executes the shared CI specification 420 provided by platform services. The specification 420 includes any dependencies etc. required for the shared component, that are resolved at stage 418. This may include extracting, according to the corresponding component configuration file, shared components from a shared repository. The resulting shared component build 422 package may be pushed to a local shared component library 424. Upon all testing being successfully completed, the packaged shared component may be stored in a shared component repository (e.g., NPM repository) 426. The storing of the shared component in the shared component repository may provide for the first application to remain anonymous to subsequent consumers of the shared component.

### Description Of Figure 5

Figure 5 shows another example build pipeline of an application using platform services on a system such as the computer system of Figure 1, according to some embodiments.

The store build pipeline 500 is illustrated as an interaction between the application build pipeline 502, shared pipeline 506, and NPM shared repository 508.

The store build pipeline 500 (e.g., implemented as a GitLab CI pipeline) may be started, in some aspects, when the application development environment 510 issues a release commit. The release commit may be issued to integrate one or more code modifications including modifications to one or more components tagged as shared/shareable. The release commit signal initiates a release build process 512.

At this point, only if the application includes any component that is tagged as shared, the store build pipeline invokes the shared pipeline 506 in the context of the application. For example, for each shared component from the application, a build and test 518 is performed.

For each successfully tested shared component, a new release version is generated 520. Thereafter, the new version is pushed to the shared repository 522. The shared pipeline maintains the latest version number of each of the shared components submitted to the shared component repository 524 where the shared components 526 are stored as packages that are accessible by other applications. The development environment 522 is also notified of the completion status of the shared pipeline for the shared component.

At the release build 512, the application build for the application proceeds independently of the shared pipeline 506 that builds shared components, if any. The release version of the application is subsequently provided to a production environment 514.

Some embodiments may additionally provide a means of triggering the shared pipeline 506 in the absence of a release commit. For example, the development team may issue the on demand instruction at 516 from the development environment 510. This may execute the shared pipeline 506 without executing a new build for the invoking application.

### Description Of Figure 6

Figure 6 shows an example of code 600 included in components to be shared using platform services on a system such as the computer system of Figure 1, according to some embodiments;

The gitlab-ci.yml 600 is an example of the code that is included in each of the shared components of the application. The code specifies a path 604 to the component configuration file, and invokes 602 the shared pipeline code. In more detail, 600 is a code snippet from gitlab-ci.yml of Application 1 or any application which seeks to share components. As already noted, "gitlab-ci.yml" is the entry file for CI pipeline and is also which defines the stages/tasks to be executed on a desired commit activity to the code repository. The build and deployment of Application 1 is defined in this file by Application1 team's developers and additionally the application team will add "include:" which points to the code shared by the platform services team by specifying the URL of the file. In this case "store-build.gitlab-ci.yml". This file will have required tasks added to identify the sharable components and act upon. In order to identify the details of shared components shared by Application 1, it is expected that Application 1 would pass the path to the file by setting STORE_PATH config variable. In some instances, it can be assumed that it will be in the default working directory if "STORE_PATH" is not specified. In case of failure in locating the file, then the pipeline will fail with a valid error message.

### Description Of Figure 7

Figures 7A-7C show examples of a user interface using shared components from platform services on a system such as the computer system of Figure 1, according to some embodiments;

Figure 7A illustrates a widget 702 developed by an application development team. The application development team may tag the component that generates the widget 702 as shared/shareable.

Figure 7B shows a user interface 704 that is displayed by a second application developed by a second development team in the collaboration computer system. The second application may obtain the widget 702 from the shared repository and use it in its application as a remote component, arranged as one of the widgets on the UI 700 along with second application local components 704 and 706.

Figure 7C illustrates a store app provided by platform services to enable development teams and/or the platform services team to test and display shared components such as the shared component 702. Store app is created by extending the tool Storybook, to work with store configurations and shared components. The store app interface 710 enables a development team to develop and test shared components, such as, for example shared component 712, and perform various configurations as needed. The user may select among stored shared component packages in the repository.

### Description Of Figure 8

Figure 8 shows a flowchart 800 of processing performed for platform services on a system such as the computer system of Figure 1, according to some embodiments.

The process of flowchart 800 may begin at operation 802. At operation 802, a first application's build pipeline executing on the first development computer system, detects a shareable component in the first application. The detection may be based upon detecting that the component has being tagged as shared/shareable or that code such as code 600 shown in Figure 6 is included in the component.

In response to the detection of a shareable component, a shared pipeline is invoked in the context of the first application's build pipeline. The shared pipeline may include operations 804, 806 and 808.

At operation 804, the shareable component is extracted (e.g., copied) from the first application source code by the shared pipeline.

At operation 806, the shareable component is built, tested and packaged. If the package completes the testing successfully, the package is ready to be deployed. The build, test and package may be performed as described in relation to Figure 2B.

At operation 808, the package is deployed, for example, stored, to the shared component repository as a shared package.

Meanwhile, after operation 802, the first application's build pipeline may proceed while the shared pipeline 804-808 proceeds in parallel. The first application's build pipeline proceeds to operation 814. At operation 814, the first application is packaged and deployed. The packaged first application may be deployed to a production system to be executed.

At a point after the shared component is packaged and deployed to the shared component repository, a second application may obtain at an operation 810 the shared component from the shared repository during the second application's build process. Subsequently, the second application is built, packaged and then deployed at operation 812.

### Description Of Figure 9

Figure 9 shows a flowchart 900 of processing of another aspect performed for platform services on a system such as the computer system of Figure 1, according to some embodiments.

At operation 902, a release commit is received for merging one or more code changes to the first application. During the processing of the release commit in the first application's build pipeline, a shared component is detected. The detection of the shared component automatically incorporates the shared pipeline 904-908.

At operation 904, the shareable component is extracted (e.g., copied) from the first application source code by the shared pipeline.

At operation 906, the shareable component is built, tested and packaged. If the package completes the testing successfully, the package is ready to be deployed. The version number for the shared component is incremented.

At operation 908, the package is deployed, for example, stored, to the shared repository as a shared package.

Meanwhile, after operation 902, the first application's build pipeline may proceed while the shared pipeline 904-908 proceeds in parallel. The first application's build pipeline proceeds to operation 914. At operation 914, the first application is packaged and deployed. The packaged first application may be deployed to a production system to be executed.

At a point after the shared component is packaged and deployed to the shared component repository with the new version number, a second application which has previously incorporated the shared component may be notified of the new version being available in the shared repository. At an operation 910 the new version of the shared component from the shared repository is obtained by the second application during the second application's build process. Subsequently, the second application is built, packaged and then deployed.

### Description Of Figure 10

Figure 10 is a block diagram of an example computing device 1000 (which may also be referred to, for example, as a "computing device," "computer system," or "computing system") according to some embodiments. In some embodiments, the computing device 1000 includes one or more of the following: one or more processors 1002 (which may be referred to as "hardware processors" or individually as a "hardware processor"); one or more memory devices 1004; one or more network interface devices 1006; one or more display interfaces 1008; and one or more user input adapters 1010. Additionally, in some embodiments, the computing device 1000 is connected to or includes a display device 1012. As will explained below, these elements (e.g., the processors 1002, memory devices 1004, network interface devices 1006, display interfaces 1008, user input adapters 1010, display device 1012) are hardware devices (for example, electronic circuits or combinations of circuits) that are configured to perform various different functions for the computing device 1000. In some embodiments, these components of the computing device 1000 may be collectively referred to as computing resources (e.g., resources that are used to carry out execution of instructions and include the processors (one or more processors 1002), storage (one or more memory devices 1004), and I/O (network interface devices 1006, one or more display interfaces 1008, and one or more user input adapters 1010). In some instances, the term processing resources may be used interchangeably with the term computing resources. In some embodiments, multiple instances of computing device 1000 may arranged into a distributed computing system.

In some embodiments, each or any of the processors 1002 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 1002 uses an instruction set architecture such as x86 or Advanced RISC Machine (ARM).

In some embodiments, each or any of the memory devices 1004 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 1002). Memory devices 1004 are examples of non-transitory computer-readable storage media.

In some embodiments, each or any of the network interface devices 1006 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), LTE Pro, Fifth Generation New Radio (5G NR) and/or other short-range, mid-range, and/or long-range wireless communications technologies). Transceivers may comprise circuitry for a transmitter and a receiver. The transmitter and receiver may share a common housing and may share some or all of the circuitry in the housing to perform transmission and reception. In some embodiments, the transmitter and receiver of a transceiver may not share any common circuitry and/or may be in the same or separate housings.

In some embodiments, data is communicated over an electronic data network. An electronic data network includes implementations where data is communicated from one computer process space to computer process space and thus may include, for example, inter-process communication, pipes, sockets, and communication that occurs via direct cable, cross-connect cables, fiber channel, wired and wireless networks, and the like. In certain examples, network interface devices 1006 may include ports or other connections that enable such connections to be made and communicate data electronically among the various components of a distributed computing system.

In some embodiments, each or any of the display interfaces 1008 is or includes one or more circuits that receive data from the processors 1002, generate (e.g., via a discrete GPU, an integrated GPU, a CPU executing graphical processing, or the like) corresponding image data based on the received data, and/or output (e.g., a High-Definition Multimedia Interface (HDMI), a DisplayPort Interface, a Video Graphics Array (VGA) interface, a Digital Video Interface (DVI), or the like), the generated image data to the display device 1012, which displays the image data. Alternatively or additionally, in some embodiments, each or any of the display interfaces 1008 is or includes, for example, a video card, video adapter, or graphics processing unit (GPU).

In some embodiments, each or any of the user input adapters 1010 is or includes one or more circuits that receive and process user input data from one or more user input devices (not shown in Figure 10) that are included in, attached to, or otherwise in communication with the computing device 1000, and that output data based on the received input data to the processors 1002. Alternatively or additionally, in some embodiments each or any of the user input adapters 1010 is or includes, for example, a PS/2 interface, a USB interface, a touchscreen controller, or the like; and/or the user input adapters 1010 facilitates input from user input devices (not shown in Figure 10) such as, for example, a keyboard, mouse, trackpad, touchscreen, etc.

In some embodiments, the display device 1012 may be a Liquid Crystal Display (LCD) display, Light Emitting Diode (LED) display, or other type of display device. In embodiments where the display device 1012 is a component of the computing device 1000 (e.g., the computing device and the display device are included in a unified housing), the display device 1012 may be a touchscreen display or non-touchscreen display. In embodiments where the display device 1012 is connected to the computing device 1000 (e.g., is external to the computing device 1000 and communicates with the computing device 1000 via a wire and/or via wireless communication technology), the display device 1012 is, for example, an external monitor, projector, television, display screen, etc.

In various embodiments, the computing device 1000 includes one, or two, or three, four, or more of each or any of the above-mentioned elements (e.g., the processors 1002, memory devices 1004, network interface devices 1006, display interfaces 1008, and user input adapters 1010). Alternatively or additionally, in some embodiments, the computing device 1000 includes one or more of: a processing system that includes the processors 1002; a memory or storage system that includes the memory devices 1004; and a network interface system that includes the network interface devices 1006. Alternatively, or additionally, in some embodiments, the computing device 1000 includes a system-on-a-chip (SoC) or multiple SoCs, and each or any of the above-mentioned elements (or various combinations or subsets thereof) is included in the single SoC or distributed across the multiple SoCs in various combinations. For example, the single SoC (or the multiple SoCs) may include the processors 1002 and the network interface devices 1006; or the single SoC (or the multiple SoCs) may include the processors 1002, the network interface devices 1006, and the memory devices 1004; and so on. The computing device 1000 may be arranged in some embodiments such that: the processors 1002 include a multi or single-core processor; the network interface devices 1006 include a first network interface device (which implements, for example, WiFi, Bluetooth, NFC, etc.) and a second network interface device that implements one or more cellular communication technologies (e.g., 3G, 4G LTE, CDMA, etc.); the memory devices 1004 include RAM, flash memory, or a hard disk. As another example, the computing device 1000 may be arranged such that: the processors 1002 include two, three, four, five, or more multi-core processors; the network interface devices 1006 include a first network interface device that implements Ethernet and a second network interface device that implements WiFi and/or Bluetooth; and the memory devices 1004 include a RAM and a flash memory or hard disk.

As previously noted, whenever it is described in this document that a software module or software process performs any action, the action is in actuality performed by underlying hardware elements according to the instructions that comprise the software module. Consistent with the foregoing, in various embodiments, each or any combination of the components 110-134 and 140 of the collaboration computer system 100, each of which will be referred to individually for clarity as a "component" for the remainder of this paragraph, are implemented using an example of the computing device 1000 of Figure 10. In such embodiments, the following applies for each component: (a) the elements of the 1000 computing device 1000 shown in Figure 10 (i.e., the one or more processors 1002, one or more memory devices 1004, one or more network interface devices 1006, one or more display interfaces 1008, and one or more user input adapters 1010), or appropriate combinations or subsets of the foregoing) are configured to, adapted to, and/or programmed to implement each or any combination of the actions, activities, or features described herein as performed by the component and/or by any software modules described herein as included within the component; (b) alternatively or additionally, to the extent it is described herein that one or more software modules exist within the component, in some embodiments, such software modules (as well as any data described herein as handled and/or used by the software modules) are stored in the memory devices 1004 (e.g., in various embodiments, in a volatile memory device such as a RAM or an instruction register and/or in a non-volatile memory device such as a flash memory or hard disk) and all actions described herein as performed by the software modules are performed by the processors 1002 in conjunction with, as appropriate, the other elements in and/or connected to the computing device 1000 (i.e., the network interface devices 1006, display interfaces 1008, user input adapters 1010, and/or display device 1012); (c) alternatively or additionally, to the extent it is described herein that the component processes and/or otherwise handles data, in some embodiments, such data is stored in the memory devices 1004 (e.g., in some embodiments, in a volatile memory device such as a RAM and/or in a non-volatile memory device such as a flash memory or hard disk) and/or is processed/handled by the processors 1002 in conjunction, as appropriate, the other elements in and/or connected to the computing device 1000 (i.e., the network interface devices 1006, display interfaces 1008, user input adapters 1010, and/or display device 1012); (d) alternatively or additionally, in some embodiments, the memory devices 1002 store instructions that, when executed by the processors 1002, cause the processors 1002 to perform, in conjunction with, as appropriate, the other elements in and/or connected to the computing device 1000 (i.e., the memory devices 1004, network interface devices 1006, display interfaces 1008, user input adapters 1010, and/or display device 1012), each or any combination of actions described herein as performed by the component and/or by any software modules described herein as included within the component. Consistent with the preceding paragraph, as one example, in an embodiment where an instance of the computing device 1000 is used to implement a client device, the memory devices 1004 could load the files associated with the user interfaces of applications 105 and 107 (e.g., HTML, XML, JavaScript files), and/or store the data described herein as processed and/or otherwise handled by the web browser applications 105-107 and/or the client device. Processors 1002 could be used to operate a rendering module, networking module, and JavaScript module, and/or otherwise process the data described herein as processed by the web browser application 105-107 and/or the client device.

The hardware configurations shown in Figure 10 and described above are provided as examples, and the subject matter described herein may be utilized in conjunction with a variety of different hardware architectures and elements. For example: in many of the Figures in this document, individual functional/action blocks are shown; in various embodiments, the functions of those blocks may be implemented using (a) individual hardware circuits, (b) using an application specific integrated circuit (ASIC) specifically configured to perform the described functions/actions, (c) using one or more digital signal processors (DSPs) specifically configured to perform the described functions/actions, (d) using the hardware configuration described above with reference to Figure 10, (e) via other hardware arrangements, architectures, and configurations, and/or via combinations of the technology described in (a) through (e).

### Technical Advantages of Described Subject Matter

In certain example embodiments, an application development collaboration system is provided that, in contrast to existing systems, enable a development team of an application to designate one or more selected components of the application as to be shared with other applications, and to have the designated one or more selected components automatically built, packaged and shared with the other applications in the collaboration system. Example embodiments also provide for automatically updating the shared component as and when the application is rebuilt. This automated approach may significantly enhance the efficiency of the software development process and may lead to improved performance and robustness. By automating the extraction, building, and sharing of components, the system may reduce manual effort and minimize the potential for human error. Furthermore, the shared pipeline, dynamically loaded as needed, may optimize network traffic and resource utilization. The automated testing framework may further ensure that shared components are compatible and reliable, possibly also leading to fewer integration errors and a more stable overall system.

By enabling the development team of a first application to share selected components of the first application by merely tagging the selected components, and by fully automating the sharing process based on the tagging and incorporating the sharing component integration pipeline into the application's own build pipeline, example embodiments improve the efficiency of sharing components between development teams in a collaboration computer system and of maintaining such shared components. The execution of the sharing component integration pipeline in a manner that it does not interfere with the build and test of the first application, vastly improves the speed and the consistency of the shared components.

Moreover, by automatically generating, for each shared component, an application framework in which the shared component can be tested as a standalone component, example embodiments provide for faster sharing and maintaining of shared components.

The technical features described herein may, by improving the operator's capabilities to respond quickly and effectively to issues in a monitored system, thus improve the reliability and performance of the monitored computer system.

### Selected Terminology

The elements described in this document include actions, features, components, items, attributes, and other terms. Whenever it is described in this document that a given element is present in "some embodiments," "various embodiments," "certain embodiments," "certain example embodiments, "some example embodiments," "an exemplary embodiment," "an example," "an instance," "an example instance," or whenever any other similar language is used, it should be understood that the given element is present in at least one embodiment, though is not necessarily present in all embodiments. Consistent with the foregoing, whenever it is described in this document that an action "may," "can," or "could" be performed, that a feature, element, or component "may," "can," or "could" be included in or is applicable to a given context, that a given item "may," "can," or "could" possess a given attribute, or whenever any similar phrase involving the term "may," "can," or "could" is used, it should be understood that the given action, feature, element, component, attribute, etc. is present in at least one embodiment, though is not necessarily present in all embodiments.

Terms and phrases used in this document, and variations thereof, unless otherwise expressly stated, should be construed as open-ended rather than limiting. As examples of the foregoing: "and/or" includes any and all combinations of one or more of the associated listed items (e.g., a and/or b means a, b, or a and b); the singular forms "a", "an", and "the" should be read as meaning "at least one," "one or more," or the like; the term "example", which may be used interchangeably with the term embodiment, is used to provide examples of the subject matter under discussion, not an exhaustive or limiting list thereof; the terms "comprise" and "include" (and other conjugations and other variations thereof) specify the presence of the associated listed elements but do not preclude the presence or addition of one or more other elements; and if an element is described as "optional," such description should not be understood to indicate that other elements, not so described, are required.

As used herein, the term "non-transitory computer-readable storage medium" includes a register, a cache memory, a ROM, a semiconductor memory device (such as D-RAM, S-RAM, or other RAM), a magnetic medium such as a flash memory, a hard disk, a magneto-optical medium, an optical medium such as a CD-ROM, a DVD, or Blu-Ray Disc, or other types of volatile or non-volatile storage devices for non-transitory electronic data storage. The term "non-transitory computer-readable storage medium" does not include a transitory, propagating electromagnetic signal.

The claims are not intended to invoke means-plus-function construction/ interpretation unless they expressly use the phrase "means for" or "step for." Claim elements intended to be construed/interpreted as means-plus-function language, if any, will expressly manifest that intention by reciting the phrase "means for" or "step for"; the foregoing applies to claim elements in all types of claims (method claims, apparatus claims, or claims of other types) and, for the avoidance of doubt, also applies to claim elements that are nested within method claims. Consistent with the preceding sentence, no claim element (in any claim of any type) should be construed/interpreted using means plus function construction/interpretation unless the claim element is expressly recited using the phrase "means for" or "step for."

Whenever it is stated herein that a hardware element (e.g., a processor, a network interface, a display interface, a user input adapter, a memory device, or other hardware element), or combination of hardware elements, is "configured to" perform some action, it should be understood that such language specifies a physical state of configuration of the hardware element(s) and not mere intended use or capability of the hardware element(s). The physical state of configuration of the hardware elements(s) fundamentally ties the action(s) recited following the "configured to" phrase to the physical characteristics of the hardware element(s) recited before the "configured to" phrase. In some embodiments, the physical state of configuration of the hardware elements may be realized as an application specific integrated circuit (ASIC) that includes one or more electronic circuits arranged to perform the action, or a field programmable gate array (FPGA) that includes programmable electronic logic circuits that are arranged in series or parallel to perform the action in accordance with one or more instructions (e.g., via a configuration file for the FPGA). In some embodiments, the physical state of configuration of the hardware element may be specified through storing (e.g., in a memory device) program code (e.g., instructions in the form of firmware, software, etc.) that, when executed by a hardware processor, causes the hardware elements (e.g., by configuration of registers, memory, etc.) to perform the actions in accordance with the program code.

A hardware element (or elements) can be therefore be understood to be configured to perform an action even when the specified hardware element(s) is/are not currently performing the action or is not operational (e.g., is not on, powered, being used, or the like). Consistent with the preceding, the phrase "configured to" in claims should not be construed/interpreted, in any claim type (method claims, apparatus claims, or claims of other types), as being a means plus function; this includes claim elements (such as hardware elements) that are nested in method claims.

### Additional Applications of Described Subject Matter

Although examples are provided herein with respect to Javascript applications based program code, example embodiments are not limited thereto. Further, although examples are provided herein with respect to user interface (UI) development, the technology described herein may also be used, mutatis mutandis, with other types of development.

Although process steps, algorithms or the like, including without limitation with reference to [Figures 2A-B, 4-5, 8 and 9], may be described or claimed in a particular sequential order, such processes may be configured to work in different orders. In other words, any sequence or order of steps that may be explicitly described or claimed in this document does not necessarily indicate a requirement that the steps be performed in that order; rather, the steps of processes described herein may be performed in any order possible. Further, some steps may be performed simultaneously (or in parallel) despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary, and does not imply that the illustrated process is preferred.

### Numbered Example Embodiments

The technology described in this disclosure thus encompasses without limitation the following numbered example embodiments. It should be appreciated that the numbered example embodiments are listed for the purpose of facilitating the understanding of various aspects and embodiments of this disclosure. The numbered example embodiments are not claims that define the scope of protection conferred. The appended claims of the disclosure define the invention and, accordingly, the scope of protection conferred.
Embodiment 1. A computer system comprising:
   a first digital storage device having stored therein a plurality of local components, a plurality of shareable components provided by a first application, and a configuration file of the first application, wherein the configuration file identifies the plurality of local components and the plurality of shareable components provided by the first application;
   a second digital storage device; and
   at least one processor configured to:
      detect, during processing a build pipeline of the first application, an indication of a shareable component included in the first application, wherein the shareable component is shared by the first application;
      extract, based on the indication and by executing instructions in a shared pipeline, the detected shareable component from the first application;
      build, by executing instructions in the shared pipeline and by linking one or more shared components from a shared component library, the detected shareable component; and
      store the built shareable component as a shared component in a repository in the second digital storage device, the second digital storage device being accessible by one or more second applications.
Embodiment 2. The system according to embodiment 1, wherein the build, by executing instructions in the shared pipeline, the detected shareable component comprises linking one or more components in accordance with a component configuration file associated with the first application.
Embodiment 3. The system according to embodiment 1, wherein the at least one processor is further configured to, in response to the detecting, dynamically include the shared pipeline in a context of the build pipeline of the first application.
Embodiment 4. The system according to embodiment 3, wherein the shared pipeline is dynamically loaded from a shared repository in the second digital storage device.
Embodiment 5. The system according to embodiment 3, wherein the indication is a statement in a program code of the shareable component.
Embodiment 6. The system according to embodiment 3, wherein the shared pipeline executes concurrently with the build pipeline of the first application.
Embodiment 7. The system according to embodiment 3, wherein the shared pipeline includes at least a test stage, a build stage, and a publish stage.
Embodiment 8. The system according to embodiment 7, wherein the shared pipeline further includes a deploy stage configured to perform said store the built shareable component as a shared component in the repository in the second digital storage device.
Embodiment 9. The system according to embodiment 7, wherein the test stage includes automated testing of the shareable component in a shell application.
Embodiment 10. The system according to embodiment 3, wherein the at least one processor is further configured to perform said dynamically including the shared pipeline in the context of the build pipeline of the first application in response to the detecting and a release commit instruction.
Embodiment 11. The system according to embodiment 1, wherein an instruction for invoking the shared pipeline is included in the first application.
Embodiment 12. The system according to embodiment 11, wherein the shared pipeline is configured to, based upon a configuration file of the first application, identify one or more shareable components of the first application, wherein the one or more sharable components includes the detected shareable component.
Embodiment 13. The system according to embodiment 1, wherein the at least one processor is further configured to associate a version number with the built shareable component.
Embodiment 14. The system according to embodiment 1, wherein the configuration file of the first application further identifies one or more remote components shared by the second application.
Embodiment 15. The system according to embodiment 14, wherein the one or more remote components are stored in the second digital storage device.
Embodiment 16. The system according to embodiment 1, wherein the at least one processor is further configured to build, by executing instructions in the build pipeline of the first application concurrently with the shared pipeline, the first application.
Embodiment 17. A method performed by at least one processor of a computer system comprising a first digital storage device and a second digital storage device, the method comprising:
   detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application; extracting, based on the indication and by executing instructions in a shared pipeline, the detected shareable component from the first application;
   building, by executing instructions in the shared pipeline and by linking one or more shared components from a shared component library, the detected shareable component; and
   storing the built shareable component as a shared component in a repository in the second digital storage device, the second digital storage device being accessible by one or more second applications.
Embodiment 18. A non-transitory computer readable storage medium storing instructions which, when executed by at least one processor of a computer system that comprises a first digital storage device and a second digital storage device, causes the computer system to perform operations comprising:
   detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application;
   extracting, based on the indication and by executing instructions in a shared pipeline, the detected shareable component from the first application;
   building, by executing instructions in the shared pipeline and by linking one or more shared components from a shared component library, the detected shareable component; and
   storing the built shareable component as a shared component in a repository in the second digital storage device, the second digital storage device being accessible by one or more second applications.

Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Moreover, it is not necessary for a device or method to address each and every problem sought to be solved by the present invention, for it to be encompassed by the invention. No embodiment, feature, element, component, or step in this document is intended to be dedicated to the public.

## Claims

1. A computer system comprising:
a first digital storage device having stored therein a plurality of local components, a plurality of shareable components provided by a first application, and a configuration file of the first application, wherein the configuration file identifies the plurality of local components and the plurality of shareable components provided by the first application;
a second digital storage device; and
at least one processor configured to:
detect, during processing a build pipeline of the first application, an indication of a shareable component included in the first application, wherein the shareable component is shared by the first application;
in response to the detecting, dynamically include the shared pipeline in a context of the build pipeline of the first application;
extract, based on the indication and by executing instructions in a shared pipeline, the detected shareable component from the first application;
build, by executing instructions in the shared pipeline and by linking one or more shared components from a shared component library in accordance with a component configuration file associated with the first application, the detected shareable component; and
store the built shareable component as a shared component in a repository in the second digital storage device, the second digital storage device being accessible by one or more second applications, and wherein the shared pipeline is dynamically loaded from a shared repository in the second digital storage device.

2. The system according to claim 1, wherein the indication is a statement in a program code of the shareable component.

3. The system according to claim 1, wherein the shared pipeline executes concurrently with the build pipeline of the first application.

4. The system according to claim 1, wherein the shared pipeline includes at least a test stage, a build stage, and a publish stage.

5. The system according to claim 4, wherein the shared pipeline further includes a deploy stage configured to perform said store the built shareable component as a shared component in the repository in the second digital storage device.

6. The system according to claim 4, wherein the test stage includes automated testing of the shareable component in a shell application.

7. The system according to claim 1, wherein the at least one processor is further configured to perform said dynamically including the shared pipeline in the context of the build pipeline of the first application in response to the detecting and a release commit instruction.

8. The system according to claim 1, wherein an instruction for invoking the shared pipeline is included in the first application.

9. The system according to claim 8, wherein the shared pipeline is configured to, based upon a configuration file of the first application, identify one or more shareable components of the first application, wherein the one or more sharable components includes the detected shareable component.

10. The system according to claim 1, wherein the at least one processor is further configured to associate a version number with the built shareable component.

11. The system according to claim 1, wherein the configuration file of the first application further identifies one or more remote components shared by the second application.

12. The system according to claim 11, wherein the one or more remote components are stored in the second digital storage device.

13. The system according to claim 1, wherein the at least one processor is further configured to build, by executing instructions in the build pipeline of the first application concurrently with the shared pipeline, the first application.

14. A method performed by at least one processor of a computer system comprising a first digital storage device and a second digital storage device, the method comprising:
detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application;
in response to the detecting, dynamically including the shared pipeline in a context of the build pipeline of the first application;
extracting, based on the indication and by executing instructions in a shared pipeline, the detected shareable component from the first application;
building, by executing instructions in the shared pipeline and by linking one or more shared components from a shared component library in accordance with a component configuration file associated with the first application, the detected shareable component; and
storing the built shareable component as a shared component in a repository in the second digital storage device, the second digital storage device being accessible by one or more second applications, and wherein the shared pipeline is dynamically loaded from a shared repository in the second digital storage device.

15. A non-transitory computer readable storage medium storing instructions which, when executed by at least one processor of a computer system that comprises a first digital storage device and a second digital storage device, causes the computer system to perform operations comprising:
detecting, during processing a build pipeline of a first application, an indication of a shareable component included in the first application, wherein the shareable component is shared by the first application, wherein the first digital storage device has stored therein a plurality of local components, a plurality of shareable components provided by the first application, and a configuration file of the first application, and wherein the configuration file identifies the plurality of local components and the plurality of shareable components provided by the first application;
in response to the detecting, dynamically including the shared pipeline in a context of the build pipeline of the first application;
extracting, based on the indication and by executing instructions in a shared pipeline, the detected shareable component from the first application;
building, by executing instructions in the shared pipeline and by linking one or more shared components from a shared component library in accordance with a component configuration file associated with the first application, the detected shareable component; and
storing the built shareable component as a shared component in a repository in the second digital storage device, the second digital storage device being accessible by one or more second applications, , and wherein the shared pipeline is dynamically loaded from a shared repository in the second digital storage device.
